(19) Europäisches Patentamt
European Patent Office
Office européen des brevets

(11) Numéro de publication: **0 246 170**
**B1**

(12) **FASCICULE DE BREVET EUROPEEN**

(45) Date de publication du fascicule du brevet: **07.11.90**

(51) Int. Cl.[5]: **C 08 L 83/04,** C 08 L 83/06

(21) Numéro de dépôt: **87420110.6**

(22) Date de dépôt: **23.04.87**

(54) **Composition monocomposante diorganopolysiloxane stabilisée par un isocyanate.**

(30) Priorité: **28.04.86 FR 8606366**

(43) Date de publication de la demande:
**19.11.87 Bulletin 87/47**

(45) Mention de la délivrance du brevet:
**07.11.90 Bulletin 90/45**

(84) Etats contractants désignés:
**BE DE FR GB IT**

(56) Documents cités:
**FR-A-2 132 797**

(73) Titulaire: **RHONE-POULENC CHIMIE**
**25, quai Paul Doumer**
**F-92408 Courbevoie Cédex (FR)**

(72) Inventeur: **Letoffe, Michel**
**5, Avenue de Limburg**
**F-69110 Sainte-Foy-Les-Lyon (FR)**
Inventeur: **Peccoux, Pierre-Michel**
**71, rue Henri Gorjus**
**F-69004 Lyon (FR)**

(74) Mandataire: **Trolliet, Maurice et al**
**RHONE-POULENC CHIMIE Service Brevets Chimie Centre de Recherches des Carrières B.P. 62**
**F-69192 Saint-Fons Cédex (FR)**

**EP 0 246 170 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Description

La présente invention concerne une composition monocomposante diorganopolysiloxane présentant une stabilité améliorée quand elle est conservée à l'abri de l'humidité et réticulant à température ambiante (c'est-à-dire habituellement à 5—35°C) en présence d'eau et son procédé de préparation. Une telle composition sera dénommée par la suite composition EVF (composition élastomère vulcanisable à froid).

Ces compositions sont préparées par mélange principalement de polymères diorganopolysiloxanes hydroxylés, de charges, de silanes polyalcoxylés particuliers, de composés aminés organiques ou organosiliciques et de carboxylates ou chelates, métalliques ou organométalliques.

Des compositions préparées par mélange de constituants proches de ceux énumérés ci-dessus sont connues. Certaines de ces compositions ne sont pas stables au stockage; elles sont alors appelées bicomposantes du fait qu'elles doivent être conditionnées dans deux emballages différents avec, par exemple, les polymères diorganopolysiloxanes hydroxylés, les charges et les silanes alcoxylés dans l'un des emballages et les composés aminés et les sels métalliques dans l'autre emballage.

Cette présentation en deux emballages n'est pas très pratique (surtout pour les applications dans le bâtiment qui sont bien souvent effectuées à l'air libre) étant donné qu'il faut mélanger soigneusement le contenu de l'un des emballages avec le contenu de l'autre seulement au moment de l'emploi et utiliser immédiatement la totalitié des compositions formées.

Des compositions de ce type figurent plus spécialement dans le brevet belge 774 830, les brevets français 2 152 908 et 2 228 814.

Le brevet belge 774 830 décrit des compositions préparées par mélange de diorganopolysiloxanes hydroxylés ou alcoxylés, de silanes (ou de polysiloxanes) alcoxylés, d'aminoalkylpolysiloxanes linéaires ayant au moins un radical aminoalkyle et au moins un radical alcoxyle, et de catalyseurs de durcissement.

Le brevet français 2 152 908 décrit des compositions préparées par mélange de diorganopolysiloxanes hydroxylés, de silanes (ou de polysiloxanes) alcoxylés, de charges, d'aminoorganosilanes à radicaux hydrolysables et de catalyseurs de durcissement.

Le brevet français 2 228 814 décrit des compositions préparées par mélange de diorganopolysiloxanes hydroxylés, de résines méthylpolysiloxaniques, de charge, d'aminoorganosilanes (ou aminoorganopolysiloxanes) alcoxylés et éventuellement de silicates ou polysilicates d'alkyle.

D'autres compositions sont stables au stockage, elles sont appelées monocomposantes et sont conditionnées en un seul emballage.

Des compositions de ce type figurent par exemple dans les brevets américains 3 161 614, 3 170 894, 3 686 357 et la demande japonaise publiée 53/102 956.

Les brevets américains 3 161 614 et 3 170 894 décrivent des compositions préparées par mélange de diorganopolysiloxanes bloqués à chaque extrémité de leur chaîne par un motif polyalcoxysiloxyle et de catalyseurs de durcissement tels que des amines organiques ou organosiliciques, Ces compositions utilisent des diorganopolysiloxanes peu accessibles, obtenus principalement par action de chloroalcoxysilanes sur des diorganopolysiloxanes hydroxylés; en outre elles durcissent lentement à l'air ce qui implique de stocker dans les ateliers, au moins pendant plusieurs jours, les assemblages jointoyés à l'aide de ces compositions.

Le brevet américain 3 686 357 décrit des compositions préparées par mélange de diorganopolysiloxanes bloqués à chaque extrémité de leur chaîne par un motif polyalcoxysiloxyle, d'aminoalkylpolysiloxanes linéaires également bloqués à chaque extrémité de leur chaîne par un motif polyalcoxysiloxyle et de catalyseurs de durcissement. Ces compositions utilisent deux sortes de polysiloxanes dont la préparation, pour chaque sorte, exige une étape spéciale. Par ailleurs elles ont tendance à augmenter de viscosité au cours de leur stockage; cette augmentation gêne considérablement leur extrusion au travers des canules des cartouches dans lesquelles elles sont habituellement conditionnées.

La demande japonaise 53/102 956 décrit des compositions préparées par mélange d'organopolysiloxanes ayant chacun au moins deux atomes de silicium liés à des groupes alcoxyles, de systèmes réticulants provenant du chaffage de silanes (ou polysiloxanes) alcoxylés avec des sels d'étain d'acides carboxyliques, et d'aminoorganosilanes alcoxylés. Ces compositions utilisent d'une part des organopolysiloxanes d'un accès plus difficile que les organopolysiloxanes hydroxylés et d'autre part des systèmes réticulants dont la préparation nécessite une étape de chauffage.

Le brevet européen EP—A—21 859 a permis de faire un progrès important en proposant une composition EVF monocomposante pouvant se faire en une seule étape en partant directement de polymères de base diorganopolysiloxanes hydroxylés et de polyalcoxysilanes spécifiques. Selon ce brevet la fonctionnalisation du polymère de base hydroxylé peut se faire au moyen d'un silane organofunctionnel qui joue également le rôle d'agent d'adhérence.

Ces compositions monocomposante peuvent présenter toutefois une stabilité au stockage insuffisante.

Selon des demandes de brevets publiées récemment (EP—A—69 256, EP—A—104 179 et FR—A—2 543 562) cette stabilité déficiente serait due à la présence de silanols résiduels provenant du polymère de base hydroxyle et qui n'auraient pas réagi sur les polyalcoxysilanes.

Ainsi les demandes de brevets européens EP—A—69 256, EP—A—104 179 et la demande de brevet français FR—A—2 543 562 proposent, en vue d'éliminer ces silanols résiduels, de rajouter à la composition

EVF un "scavenger" qui peut être respectivement un silane présentant un groupe hydrolysable labile réagissant préférentiellement sur les motifs silanols résiduels, un polysilazane et un composé organique ayant au moins un groupe fonctionnel réagissant avec le groupe silanol.

Tel qu'utilise ci-après, le terme "stable" appliqué à une composition EVF d'organopolysiloxane à terminaisons alcoxy monocomposante de la présente invention désigne un mélange durcissable à l'humidité capable de rester pratiquement inchangé lorsqu'il est protégé de l'humidité atmosphérique et qui durcit en un élastomère non collant au toucher même après une période de stockage prolongée. De plus, une composition EVF stable signifie aussi que le temps jusqu'à l'état non collant au toucher présenté par les ingrédients d'une composition EVF fraîchement mélangés dans les conditions atmosphériques sera pratiquement le même que celui présenté par le même mélange d'ingrédients soumis à l'humidité atmosphérique après avoir été conservé dans un récipient exempt d'humidité et résistant à l'humidité pendant une période prolongée de stockage aux conditions ambiantes, ou une période équivalente basée sur un vieillissement accéléré à une température élevée.

Après de longues et coûteuses recherches, la Demanderesse a pu mettre en évidence que la dégradation au stockage des compositions EVF semble plus due à la présence simultanée dans les compositions EVF d'une part du catalyseur de condensation à base d'un métal en particulier l'étain et d'autre part du catalyseur de fonctionnalisation des huiles hydroxylées à savoir une amine primaire ou secondaire catalysant la réaction du polymère de base hydroxylé sur le polyalcoxysilane, même si ce catalyseur ne se trouve qu'en très faibles quantités au sein de la composition EVF.

La présente invention a permis de résoudre ce problème en ajoutant à la composition EVF une quantité stabilisatrice d'au moins un isocyanurate de formule:

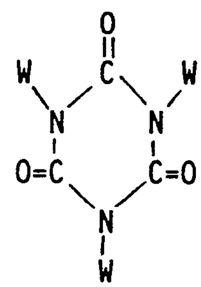

(1)

dans laquelle W est un radical $-(CH_2)_n-N=C=O$ avec n entier compris entre 1 et 12 inclus.

Par quantité stabilisatrice d'isocyanurate de formule (1) on entend selon l'invention une quantité telle que l'isocyanurate a réagi au moins sur toutes le fonctions amines primaires et secondaires du catalyseur de fonctionnalisation.

Ces fonctions amines sont plus réactives que les fonctions silanol ou alcool résiduelles et la composition EVF est stabilisée même si ces fonctions silanol ou alcool restent dans la composition sans avoir réagi sur l'isocyanurate dans le cas où l'isocyanurate a été ajouté en quantité juste suffisante pour ne réagir que sur les fonctions amines.

Ceci constitue une première différence essentielle avec l'enseignement de FR—A—2 543 562 où le produit organique à fonction isocyanate est ajouté pour réagir sur les motifs silanols résiduels et sur les alcools organiques engendrés lors de la réaction de fonctionnalisation des polymères hydroxylés et non pas sur les fonctions amines primaires et secondaires du catalyseur de fonctionnalisation.

Par ailleurs, les additifs isocyanurates à fonction isocyanate selon l'invention présentent la propriéte de présenter une très faible tension de vapeur, de ne pas colorer les compositions EVF après chauffage, d'être stables jusqu'à des températures pouvant dépasser 220°C, d'être parfaitement miscibles avec les silicones et d'être inodores et non toxiques.

Il apparaît donc que le problème posé par FR—A—2 543 562 (élimination des silanols résiduels) est différent de celui posé par la présente demande (élimination des fonctions amines primaires et secondaires) et les moyens décrits sone également différents car beaucoup de stabilisants décrits par FR—A—2 543 562 ne peuvent conduire au résultat visé par la présente demande. Certes FR—A—2 543 562 décrit l'utilisation de stabilisant à fonction isocyanate mais dans un but différent et ne décrit ni ne suggère les isocyanurates, de formule (1) visés par la présente demande.

La présente invention permet donc d'éliminer les fonctions amines primaires et secondaires sans passer nécessairement par l'étape coûteuse de dévolatilisation par chauffage sous pression réduite de la composition EVF. Cette dévolatilisation par ailleurs ne chasse qu'imparfaitement le catalyseur surtout si ce dernier est peu volatil.

Dans ce que suit, sauf mentions contraires, les pourcentages et parties sont en poids.

La présente invention vise plus spécifiquement une composition d'organopolysiloxane vulcanisable à température ambiante monocomposante stable au stockage en absence d'humidité et transformable en élastomère en présence d'humidité, caractérisée en ce qu'elle comporte:

(i) 100 parties d'au moins un polymère diorganopolysiloxane de formule:

$$R^2_{3-a}\ R^1_a\ Si(OSiR_2)_rOSiR^1_a\ R^2_{3-a} \qquad (2)$$

dans laquelle R identiques ou différents représentent des radicaux hydrocarbonés ayant de 1 à 10 atomes de carbone éventuellement substitués par des atomes d'halogène ou des groupes cyano, $R^1$ identiques ou différents représentant des radicaux hydrocarbonés en $C_1$—$C_{10}$, $R^2$ identiques ou différents représentent des radicaux alcoxy ou polyalcoxy de formules ZO ou ZOEO, dans lesquelles z représente un radical alkyle en $C_1$—$C_4$, E un radical alkylène linéaire ou ramifié en $C_2$—$C_4$, a représente zéro ou 1 et le symbole r un nombre ayant une valeur suffisante pour conférer au polymère de formule (2) une viscosité de 500 à 1 000 000 de mPa.s a 25°C.

(2i) 0 à 15 parties d'au moins un polyalcoxysilane de formule:

$$R^1_a\ Si\ R^2_{3-a} \qquad (3)$$

dans laquelle $R^1$, $R^2$ et a ont la signification ci-dessus.

(3i) 0 à 250 parties de charges minérales.

(4i) 0,001 à 3 parties d'un catalyseur de condensation.

(5i) 0,001 à 15 parties d'au moins un composé aminé porteur d'au moins une fonction amine primaire ou secondaire choisis parmi les amines organiques ayant un pkb en milieux aqueux inférieure à 5 et les aminoorganosilanes et aminoorganopolysiloxanes portant par molécule à la fois:

au moins un groupe organique en $C_3$—$C_{15}$ lié par une liaison SiC à l'atome de silicium et porteur d'au moins une fonction amino,

et au moins un radical alcoxy en $C_1$—$C_5$ ou un radical alcoxyalkylèneoxy en $C_3$—$C_6$, ayant réagi avec une quantité stabilisatrice d'au moins un isocyanurate de formule:

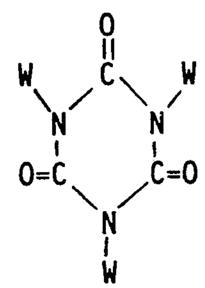

(1)

dans laquelle W est un radical $(CH_2)$—$_n$ N=C=O avec n est un nombre entier compris entre 1 et 12 inclus.

Le polymère (i) de formule (2) est préparé par mise en contact d'un polymère alpha, oméga-dihydroxydiorganopolysiloxane de formule:

$$H—(OSiR_2)_r—OH$$

avec un polyalcoxysilane de formule (3) dans lesquelles R, $R^1$ et $R^2$ ont la signification ci-dessus à raison d'au moins deux moles de polyalcoxysilane pour une mole de polysiloxane hydroxylé.

Cette réaction a lieu en présence d'au moins un composé aminé tel que défini en (5i), par exemple une amine organique primaire ou secondaire (brevet américain US—A—3 542 901 et le brevet européen EP—A—21 859), une hydroxylamine N—N disubstituée (brevet français 2 508 467), une aminoorganosilane (EP—A—21 859).

Les polymères alpha, oméga-dihydroxydiorganopolysiloxanes de viscosité 700 à 1 000 000 mPa.s à 25°C, de préférence 1 000 à 700 000 mPa.s à 25°c, sont des polymères linéaires, constitués essentiellement de motifs diorganosiloxy de formule précitée $T_2SiO$, et bloqués à chaque extrémité de leur chaîne par un groupe hydroxyle; toutefois, la présence de motifs monoorganosiloxy de formule $TSiO_{1,5}$ et/ou de motifs siloxy de formule $SiO_2$, n'est pas exclue dans la proportion d'au plus 2% par rapport au nombre de motifs diorganosiloxy.

Les radicaux hydrocarbonés, ayant de 1 à 10 atomes de C, substitués ou non par des atomes d'halogènes ou des groupes cyano, représentés par les symboles R, englobent:

les radicaux alkyles et halogénoalkyles ayant de 1 à 10 atomes de carbone tels que les radicaux méthyle, éthyle, propyle, isopropyle, butyle, pentyle, hexyle, éthyl-2 hexyle, octyle, décyle, trifluoro-3,3,3 propyle, trifluoro-4,4,4 butyle, pentafluoro-4,4,4,3,3 butyle.

les radicaux cycloalkyles et halogénocycloalkyles ayant de 1 à 10 atomes de carbone tels que les radicaux cyclopentyle, cyclohexyle, méthylcyclohexyle, propylcyclohexyle, difluoro-2,3 cyclobutyle, difluoro-3,4 méthyl-5 cycloheptyle.

les radicaux alcényles ayant de 2 à 4 atomes de carbone tels que les radicaux vinyle, allyle, butène-2 yle.

les radicaux aryles et halogénoaryles mononucléaires ayant de 6 à 10 atomes de carbone tels que les radicaux phényle, tolyle, xylyle, chorophényle, dichlorophényle, trichlorophényle.

les radicaux cyanoalcoyles dont les chaînons alcoyles ont de 2 à 3 atomes de carbone tels que les radicaux β-cyanoéthyle et γ-cyanopropyle.

les radicaux méthyle, phényle, vinyle et trifluoro-3,3,3 propyle sont les radicaux préférés.

A titre d'exemples concrets de motifs représentés par la formule $T_2SiO$ on peut citer ceux de formules:

$(CH_3)_2SiO,$

$CH_3(CH_2{=}CH)SiO$

$CH_3(C_6H_5)SiO$

$(C_6H_5)_2SiO,$

$CF_3CH_2CH_2(CH_3)SiO$

$NC{-}CH_2CH_2(CH_3)SiO$

$NC{-}CH(CH_3)CH_2(CH_2{=}CH)SiO$

$NC{-}CH_2CH_2CH_2(C_6H_5)SiO$

Il doit être compris que l'on peut utiliser comme polymère un mélange constitué de polymères alpha, oméga-dihydroxydiorganopolysiloxanes qui diffèrent entre eux par le poids moléculaire et/ou la nature des groupements liés aux atomes de silicium.

Ces polymères alpha, oméga-dihydroxydiorganopolysiloxanes sont commercialisés; en outre, ils peuvent être aisément fabriqués selon des techniques maintenant bien connues.

A titre illustratif, les polymères diorganopolysiloxanes (i) peuvent être bloqués, à chaque extrémité de leur chaîne, par des motifs de formules:

$(CH_3O)_2CH_3SiO_{0,5}$

$(CH_3O)_3SiO_{0,5}$

$(CH_3OCH_2CH_2O)_2CH_3SiO_{0,5}$

$(CH_3OCH_2CH_2O)_3SiO_{0,5}$

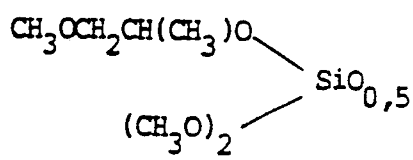

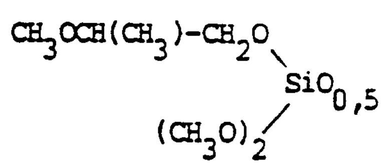

Pour 100 parties de polymère (i) de formule (2) sont utilisés de 0 à 15 parties, de préférence de 2,5 à 10 parties d'un polyalcoxysilane (2i) de formule (3) dans laquelle:

$R^1$ représente un radical hydrocarboné en $C_1$—$C_{10}$ qui englobe plus spécialement:

les radicaux alkyle en $C_1$—$C_5$ tels que les radicaux méthyle, éthyle, propyle, isopropyle, butyle, isobutyle, tertiobutyle, n-pentyle, isopentyle,

les radicaux alcènyle en $C_2$—$C_4$ tels que les radicaux vinyle, allyle, butène-2 yle,

les radicaux cycloalkyle en $C_5$—$C_8$ tels que les radicaux cyclopentyle, cyclohexyle, méthylcyclohexyle,

les radicaux aryle mononucléaires en $C_6$—$C_{10}$ tels que les radicaux phényle, tolyle, xylyle.
$R^2$ identiques ou différents représentent comme indique ci-dessus des radicaux alcoxy ou polyalcoxy.
A titre d'exemples concrets de produit de formule (3) on peut citer ceux de formules:

$Si(OCH_3)_4$

$CH_3Si(OCH_3)_3$

$CH_3Si(OCH_2CH_2OCH_3)_3$

$Si(OCH_2CH_2CH_3)_4$

$CH_2{=}CHSi(OCH_2CH_2OCH_3)_3$

$C_6H_5Si(OCH_3)_3$

$C_6H_5Si(OCH_2CH_2OCH_3)_3$

$Si(OCH_3)_2[OCH(CH_3)CH_2OCH_3]_2$

$CH_2{=}CHSi(OCH_3)_3$

$CH_2{=}CH{-}CH_2Si(OCH_3)_3$

$CH_2{=}C(CH_3)CH_2Si(OCH_3)_3$

$CH_2{=}CH{-}Si(OCH_3)_2[OCH(CH_3)CH_2OCH_3]$

Les charges (3i) sont utilisées à raison de 0 à 250 parties, de préférence de 5 à 200 parties pour 100 parties de polymère (i).

Ces charges peuvent se présenter sous la forme de produits très finement divisés dont le diamètre particulaire moyen est inférieur à 0,1 micromètre. Parmi ces charges figurent les silices de combustion et les silices de précipitation; leur surface spécifique BET est généralement supérieure à 40 $m^2/g$.

Ces charges peuvent également se présenter sous la forme de produits plus grossièrement divisés, de diamètre particulaire moyen supérieur à 0,1 micromètre. Comme exemples de telles charges, on peut citer le quartz broyé, les silices de diatomées, le carbonate de calcium, l'argile calcinée, l'oxyde de titane du type rutile, les oxydes de fer, de zinc, de chrome, de zirconium, de magnésium, les différentes formes d'alumine (hydratée ou non), le nitrure de bore, le lithopone, le métaborate de baryum, le sulfate de baryum, les microbilles de verre; leur surface spécifique est généralement inférieure à 30 $m^2/g$.

Ces charges peuvent avoir été modifiées en surface par traitement avec les divers composés organosiliciques habituellement employés pour cet usage. Ainsi ces composés organosiliciques peuvent être des organochlorosilanes, des diorganocyclopolysiloxanes, des hexaorganodisiloxanes, des hexaorganodisilazanes ou des diorganocyclopolysiloxanes (brevets français 1 126 884, 1 136 885, 1 236 505; brevet anglais 1 024 234). Les charges traitées renferment, dans la plupart des cas, de 3 à 30% de leur poids de composés organosiliciques.

Les charges peuvent être constituées d'un mélange de plusieurs types de charges de granulométrie différente; ainsi par exemple, elles peuvent être constituées de 30 à 70% de silices finement divisées de surface spécifique BET supérieure à 40 $m^2/g$ et de 70 à 30% de silices plus grossièrement divisées de surface spécifique inférieure à 30 $m^2/g$.

Comme catalyseur de condensation (4i) on peut utiliser au moins un composé d'un métal choisi notamment parmi le fer, le plomb, l'étain, le titane et le zirconium, bien connus de l'homme de métier. L'étain est le métal préféré par exemple sous la forme de monocarboxylates et de dicarboxylates d'étain tels que l'éthyl-2 hexanoate d'étain, le dilaurate de dibutylétain, le diacétate de dibutylétain (voir le livre de NOLL "Chemistry and technology of silicone", page 337, Academic Press, 1968 — 2 ème édition).

Les chelates d'étain de valence IV hexacoordinés tels que ceux décrits dans la demande de brevet européen EP—A—147 323 et le brevet US—A—4 517 337 cités come référence sont particulièrement appropries.

Sont également préférés, les catalyseurs de condensation qui sont un mélange d'un bis(β-dicétonate) de diorganoétain avec un dérivé organique de l'étain également de valence IV, mais exempt de fonction β-dicétonato, et possèdant au moins un atome d'étain, chaque atome d'étain portant deux radicaux organiques liés par une liaison Sn—C, les deux autres valences étant satisfaites au moyen de radicaux choisis parmi les radicaux organiques ou inorganiques liés par une liaison SnO, SnS, par des atomes d'halogènes, par des groupes hydroxy et par des atomes d'oxygène.

Ces dérivés organiques de l'étain de valence IV exempts de fonction β-dicétonato peuvent être en particulier des sels d'étain répondant aux formules:

$A_2SnR^6_2$

$R^6_2SnO,$

$AR^6_2SnOSnR^6_2A$

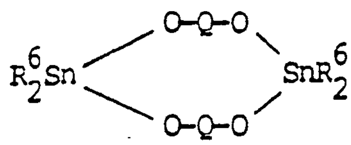

dans lesquelles:

$R^6$ représente un radical hydrocarboné, halogéné ou non, en $C_1$—$C_{20}$,

A représente un atome d'halogène ou un radical organique ou inorganique, lié à l'atome d'étain par une liaison Sn—O ou Sn—S,

Q représente un radical alkylène en $C_2$—$C_{10}$, A peut être choisi dans le groupe constitué:

(e) des radicaux mono-carboxylates de formule $R^7COO$, $R^7$ étant un radical hydrocarboné, halogéné ou non, en $C_1$—$C_{20}$,

(2e) des radicaux dicarboxylates de formule

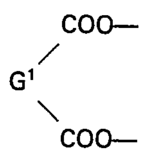

liés à un même atome d'étain ou à deux atomes d'étain conduisant aux deux formules:

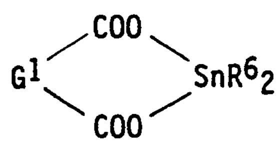

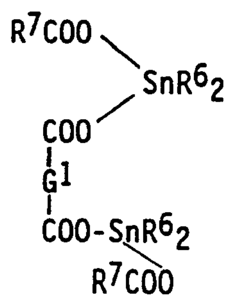

dans lesquelles $G^1$ représente un radical hydrocarboné divalent en $C_1$—$C_{15}$ et $R^7$ a la signification donnée sous (e),

(3i) des radicaux dicarboxylates de formule $R^7OCOG^1COO$ dans laquelle $R^7$ et $G^1$ ont la signification donnée respectivement sous (e) et (2e).

Les sels d'étain ci-dessus sont bien connus et sont décrits en particulier dans l'ouvrage de NOLL précité, les brevets US—A—3 186 963, 3 862 919, le brevet belge 842 305 et le brevet britannique GB—A—1 289 900 cités comme référence.

En ce qui concerne les composés aminés porteurs d'au moins une fonction amine primaire ou secondaire on peut utiliser des amines organiques, des aminoorganosilanes et des aminoorganopolysiloxanes. Parmi les amines organiques on peut utiliser les amines aliphatiques, les amines cycloaliphatiques, les amines hétérocycliques et les amines arylaliphatiques.

On peut citer comme exemples concrets d'amines aliphatiques: la n-butylamine, l'amylamine, les amines de formules:

$$CH_3-\underset{\displaystyle CH_3}{\underset{|}{CH}}-CH_2CH_2NH_2$$

$$CH_3-CH_2-C(CH_3)_2NH_2$$

la n-hexylamine, la n-décylamine, la laurylamine, l'hexadécylamine, la n-octylamine, la di(isopropyl)amine, la di(n-butyl)amine, la di(isobutyl)amine, la di-n hexylamine, l'éthylènediamine, la propylènediamine, l'hexaméthylènediamine, les polyamines de formules:

$$H_2NCH_2CH_2-\underset{\displaystyle CH_3}{\underset{|}{CH}}-CH_2C(CH_3)_2CH_2NH_2$$

$$H(NHCH_2CH_2)_2NH_2$$

$$H(HNCH_2CH_2)_3NH_2$$

$$H_2NCH_2CH(NH_2)CH_2NH_2$$

A titre d'exemples concrets d'amines cycloaliphatiques peuvent être citées la cyclopentylamine, la cyclohexylamine, les amines de formules:

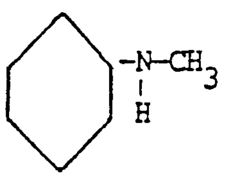
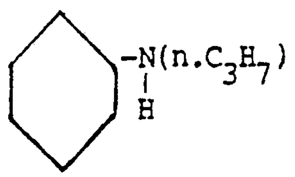
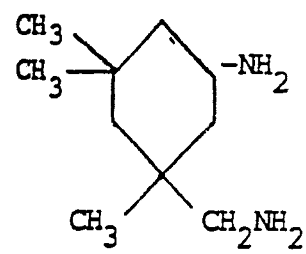

A titre d'exemples concrets d'amines hétérocycliques peuvent être citées: la pipéridine, la pyrrolidine, la pipérazine, les amines de formules:

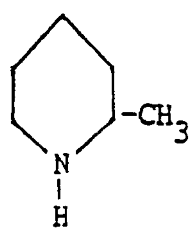
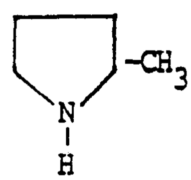

A titre d'exemples concrets d'amines arylaliphatiques peuvent être citées: la benzylamine, la phényléthylamine.

Toutes ces amines organiques sont connues ainsi que leur procédé de préparation; par ailleurs on trouve un grand nombre d'entre elles sur le marché industriel.

Les composés aminés peuvent être choisis également parmi les aminoorganosilanes et aminoorganopolysiloxanes portant par molécule au moins un groupe organique en $C_3$—$C_{15}$, lié par une liaison SiC à l'atome de silicium, et substitué par au moins un radical amino à amine primaire ou secondaire et au moins un radical alcoxy en $C_1$—$C_5$ ou alcoxyalkylènoxy en $C_3$—$C_6$.

Comme exemples concrets d'organoaminosilanes peuvent être cités ceux de formules ci-après, dans lesquelles le groupe organique substitué par au moins un radical amino est un groupe hydrocarboné:

$$H_2N(CH_2)_3Si(OCH_2CH_2OCH_3)_3$$

$$H_2N(CH_2)_3Si(OCH_3)_3$$

$$H_2N(CH_2)_3Si(OC_2H_5)_3$$

$$H_2N(CH_2)_4Si(OCH_3)_3$$

$H_2NCH_2CH(CH_3)CH_2CH_2SiCH_3(OCH_3)_2$

$H_2NCH_2Si(OCH_3)_3$

$HN(n.C_4H_9)CH_2Si(OCH_3)_3$

$H_2N(CH_2)_2NH(CH_2)_3Si(OCH_3)_3$

$H_2N(CH_2)_2NH(CH_2)_3Si(OCH_2CH_2OCH_3)_3$

$CH_3NH(CH_2)_2NH(CH_2)_3Si(OCH_3)_3$

$H(NHCH_2CH_2)_2NH(CH_2)_3Si(OCH_3)_3$

$$\begin{array}{l} H_2N(CH_2)_2NH(CH_2)_3Si(OCH_3)_2 \\ \qquad\qquad\qquad\qquad\quad | \\ \qquad\qquad\qquad\qquad\quad OCH(CH_2)_3CH_2OCH_3 \end{array}$$

$$\begin{array}{l} H_2N(CH_2)_2NH(CH_2)_3SiCH{=}CH_2 \\ \qquad\qquad\qquad\qquad\quad | \\ \qquad\qquad\qquad\qquad\quad (OCH_3)_2 \end{array}$$

La préparation de ces silanes figure plus spécialement dans des brevets américains 2 754 311, 2 832 754, 2 930 809, 2 971 864.

Comme exemples concrets d'organoaminosilanes peuvent être cités ceux de formules ci-après, dans lesquelles, le groupe organique substitué par au moins un radical amino est un groupe hydrocarboné portant des liaisons éther ou thioéther:

$H_2N(CH_2)_3O(CH_2)_3Si(OCH_2CH_2OCH_3)_3$

$H_2N(CH_2)_3O(CH_2)_3Si(OCH_3)_3$

$C_2H_5NH(CH_2)_3O(CH_2)_3Si(OCH_3)_3$

$H_2N{-}CH_2{-}CH(CH_3)CH_2O(CH_2)_3SiC_6H_5(OCH_3)_2$

$H_2N{-}CH_2CH_2NH(CH_2)_3O(CH_2)_3Si(OCH_3)_3$

$H_2N(CH_2)_2S(CH_2)_3Si(OCH_2CH_2OCH_3)_3$

$H_2N(CH_2)_2S(CH_2)_3Si(OCH_3)_3$

$H(NHCH_2CH_2)_2S(CH_2)_3SICH_3(OCH_3)_2$

La préparation de ces silanes figure, en particulier, dans les brevets américains 3 341 563, 3 551 375, 3 598 853, 3 488 373.

Les aminoorganopolysiloxanes utilisables peuvent être préparés par condensation des aminoorganosilanes précités, et plus particulièrement des aminoorganosilanes trialcoxylés tels que ceux de formules:

$H_2N(CH_2)_3Si(OC_2H_5)_3$

$H_2N(CH_2)_3Si(OCH_3)_3$

$H_2N(CH_2)_2NH(CH_2)_3Si(OCH_3)_3$ avec un polymère dihydroxydiorganopolysiloxane appartenant à la classe des polymères précités de formule (4).

Des aminoorganopolysiloxanes préparés selon ce processus figurent notamment dans le brevet américain 3 686 375, la demande européenne 50 453, les brevets français 1 381 590, 1 385 693, 2 228 814.

Les compositions selon l'invention peuvent en outre, pour 100 parties de (i), contenir, pour améliorer l'adhérence de 0,5 à 10 parties d'au moins un aminoorganosilane ou aminoorganopolysiloxane (6i) portant, par molécule, au moins un groupe organique en $C_3$—$C_{15}$ lié par une liaison SiC à l'atome de silicium et substitué par au moins un radical amino à amine tertiaire et/ou un radical guanidino, comme par exemple les guanidinoorganosilanes et les guanidinoorganopolysiloxanes décrits dans le brevet américain 4 180 642, et au moins un groupe alcoxy en $C_1$—$C_5$ ou un radical alcoxyalkylèneoxy en $C_3$—$C_6$.

Comme promoteurs d'adhérence (6i) plus particulièrement appropriés sont les silanes de formule:

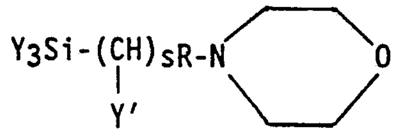

dans laquelle les radicaux Y, identiques ou différents sont choisis parmi un radical alkyle et alcoxy ayant inclusivement de 1 à 4 atomes de carbone au moins deux des radicaux Y étant des radicaux alcoxy, Y' identiques ou différents sont choisis parmi l'atome d'hydrogène et un radical alkyle ayant inclusivement de 1 à 3 atomes de carbone et s est un nombre entier compris entre 3 et 10 inclusivement.

Comme silane de formule (5) on peut citer:

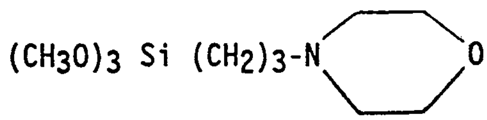

gammamorpholinopropyltriméthoxysilane

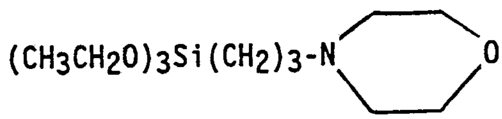

gammamorpholinopropyltriéthoxysilane.

Ces produits et leur procédé de préparation sont décrits par John L. SPEIER, I. Org., Chem., vol. 36, n° 21, 1971, page 3 120.

Les isocyanurates de formule (1) sont des produits bien connus dont les procédés de préparation sont notamment décrits dans le brevet européen EP—A—57 653 cité comme référence.

Les isocyanurates préférés sont ceux pour lesquels dans la formule (1) n est compris entre 4 et 8 inclusivement et en particulier celui pour lequel n = 6 et commercialisé par la Société RHONE-POULENC sous la dénomination commerciale TOLONATE HDT®.

Les quantités stabilisatrices de produit de formule (1) à utiliser dépendent de la quantité d'amine utilisée telle que définie en (5i), de la dévolatilisation éventuelle du polymère (i), du caractère plus ou moins volatile de l'amine.

Pour fixer les idées, on peut par exemple utiliser avantageusement de 0,01 à 5 parties de produit de formule (1) pour 100 parties de polymère (i).

La présente invention vise également un procédé de préparation des compositions EVF selon lequel, dans des conditions anhydres, on prépare les polymères (i) par réaction d'une mole de polymère de formule (4) sur au moins deux moles de polyalcoxysilane (2i) en présence d'une quantité catalytiquement efficace de composé aminé, tel que défini en (5i), puis après réaction et une éventuelle dévolatilisation on incorpore les composés: (2i), (3i), (4i), (5i) et (6i) ci-dessus.

## Exemple 1

Dans un malaxeur on mélange dans des conditions anhydres:

100 parties d'huile alpha, oméga-dihydroxydiméthylpolysiloxane de viscosité 20 000 mPa.s à 25°C ayant un taux d'hydroxyle de 750 ppm (parties par million),

7 parties de silicate de méthyle,

0,2 partie de pipéridine.

On chauffe pendant 40 minutes à 80°C puis on dévolatilise sous un vide de 0,133 kPa tout en agitant.

Cette dévolatilisation élimine le méthanol produit par la réaction du silicate de méthyle sur les silanols de l'huile silicone, le silicate de méthyle en excès et la pipéridine. Un dosage par polarographie permet d'évaluer toutefois qu'il subsiste environ 0,0150 partie de pipéridine pour 100 parties de mélange réactionnel et que ces dernières traces d'amine sont très difficiles à éliminer par simple dévolatilisation.

On laisse refroidir le mélange et on ajout 0,15 partie de dilaurate de dibutyle étain et des quantités variables de TOLONATE HDT.

Les compositions maintenues à l'abri de l'humidité sont divisées en six lots.

Sur un premier lot, on étale à l'air ambiant une couche de 2 mm d'épaisseur sur une plaque de polyéthylène préalablement enduite d'un détergent commercial. Pour apprécier le temps de prise on note la durée (t) en mn où obtient un toucher non collant de la couche.

Sur le film vieux de 2 ou 7 jours on mesure la dureté SHORE A (DSA 2 jours) et (DSA 7 jours), selon la norme NF—T—51109 et éventuellement la résistance à la rupture R/R en MPa selon la norme NF—T—46002

et l'allongement à la rupture A/R en % selon la norme NF—T—46002. Les compositions des 5 autres lots sont soumises au préalable à un test de vieillissement accéléré par mise en étuve en atmosphère anhydre, à une température de 100°C et durant des durées variables. A la fin du test, après refroidissement à température ambiante, on effectue les mesures comme pour le premier lot.

Les résultats sont rassemblés dans le tableau 1 ci-après dans lequel les quantités de TOLONATE HDT sont notées en parties pour 100 parties d'huile hydroxylées de départ.

TABLEAU 1

| TOLONATE HDT | | DUREE DU VIEILLISSEMENT EN HEURES | | | | | |
|---|---|---|---|---|---|---|---|
| | | 0 | 8 | 16 | 24 | 36 | 48 |
| 0 | t/mn | 115 | 120 | 120 | 130 | 240 | - |
| | DSA 2 j. | 18 | 18 | 18 | 18 | 8 | 0 |
| | DSA 7 j. | 22 | 22 | 22 | 21 | 8 | 0 |
| 0,05 | t/mn | 140 | 135 | 140 | 145 | 160 | 200 |
| | DSA 2 j. | 16 | 16 | 17 | 16 | 14 | 11 |
| | DSA 7 j. | 19 | 19 | 20 | 19 | 17 | 15 |
| 0,085 | t/mn | 200 | 220 | 210 | 210 | 220 | 240 |
| | DSA 2 j. | 11 | 12 | 12 | 12 | 12 | 10 |
| | DSA 7 j. | 17 | 18 | 18 | 18 | 15 | 15 |

Le tableau 1 ci-dessus montre que le vieilliseement accéléré à 100°C provoque un allongement du temps de prise et une diminution de la dureté du réticulat lorsqu'on n'a pas ajoute de TOLONATE HDT et que la présence d'une faible quantité de celui-ci suffit à apporter une excellent stabilité des compositions même après vieillissement de 48 heures à 100°C. On observe également que de fortes quantités de TOLONATE HDT augmentent le temps de prise ce qui serait probablement dû au piègage de l'eau par le TOLONATE.

Exemple 2

On reproduit le mode opératoire de l'exemple 1 sauf que l'on n-effectue pas l'étape de dévolatilisation. Par conséquent le mélange réactionnel obtenu contient tout le méthanol formé et toute l'amine introduite et on ajoute donc des quantités de TOLONATE HDT supérieures. Les résultats sont rassemblés dans le tableau 2 ci-après.

TABLEAU 2

| TOLONATE HDT | | DUREE DU VIEILLISSEMENT EN HEURES | | | | | |
|---|---|---|---|---|---|---|---|
| | | 0 | 8 | 16 | 24 | 36 | 48 |
| 0 | t/mn | 165 | 150 | 120 | 120 | 200 | - |
| | DSA 2 j. | 10 | 12 | 19 | 17 | 2 | 0 |
| | DSA 7 j. | 21 | 21 | 21 | 18 | 12 | 0 |
| 0,7 | t/mn | 195 | 165 | 140 | 140 | 200 | 360 |
| | DSA 2 j. | 8 | 9 | 9 | 8 | 10 | 4 |
| | DSA 7 j. | 22 | 22 | 21 | 20 | 18 | 12 |
| 1,4 | t/mn | 195 | 165 | 180 | 170 | 180 | 220 |
| | DSA 2 j. | 8 | 8 | 7 | 6 | 8 | 5 |
| | DSA 7 j. | 18 | 19 | 19 | 18 | 18 | 15 |

Le tableau 2 ci-dessus montre que le TOLONATE HDT confère une bonne stabilité même après vieillissement accéléré.

Exemple 3

On répète le mode opératoire de l'exemple 1 sauf que le dévolatilisation laisse dans le mélange réactionnel, pour 100 parties de ce dernier, 0,085 partie de pipéridine.

A 100 parties de mélange réactionnel on ajoute:

1 partie de silicate de méthyle,

3 parties de gammamorpholinopropyltriméthoxysilane,

10 parties de silice de combustion de surface BET 60 $m^2/g$ traitée par l'octaméthycyclotétrasiloxane,

0,15 partie de dilaurate de dibutylétain,

des quantités variables de TOLONATE HDT.

Sur les compositions obtenues, non coulantes et adhérentes sur divers supports, on effectue les mesures comme indiqué à l'exemple 1 sans ou après vieillissement accéléré de 2 jours à 100°C. Les résultats obtenus sont rassemblés dans le tableau 3 ci-après dans lequel les quantités de TOLONATE HDT sont indiquées en parties en poids pour 100 parties de mélange réactionnel.

Le tableau 3 montre que l'addition de TOLONATE HDT permet d'obtenir des compositions EVF qui ont des propriétés identiques sans ou aprés vieillissement accélére.

TABLEAU 3

| TOLONATE HDT | 0 | | 0,6 | | 1 | |
|---|---|---|---|---|---|---|
| VIEILLISSEMENT | non | oui | non | oui | non | oui |
| t/m | 40 | 35 | 20 | 30 | 40 | 30 |
| DSA 2 j. | 22 | 10 | 22 | 26 | 22 | 25 |
| DSA 7 j. | 32 | 14 | 33 | 34 | 34 | 32 |
| R/R MPa | 1,7 | 1,3 | 1,9 | 2,3 | 2,3 | 2,2 |
| AR % | 258 | 477 | 267 | 328 | 328 | 322 |

Exemple 4

Dans cet exemple en reproduisant le mode opératoire de l'exemple 1 on mélange et on chauffe à 80°C pendant 20 mintes:

100 parties d'huile alpha, oméga-dihydroxydiméthylpolysiloxane de viscosité 20 000 mPa.s à 25°C,

7 parties de silicate de méthyle,

0,2 partie de pipéridine.

On ajoute après refroidissement à 20—25°C:
2 parties de gammamorpholinopropyltriméthoxysilane,
10 parties de silice de combustion de surface BET de 60 $M^2/g$ traitée à l'octaméthylcyclotétrasiloxane,
0,15 partie de dilaurate de dibutylétain,
0 ou 1,5 partie de TOLONATE HDT.
On effectue les mêmes mesures qu'à l'exemple 3.
Les résultats sont rassemblés dans le tableau 4 ci-après.

TABLEAU 4

| TOLONATE HDT | 0 | | 1,5 | |
|---|---|---|---|---|
| VIEILLISSEMENT | non | oui | non | oui |
| t/m | 40 | 80 | 35 | 20 |
| DSA 2 j. | 23 | 10 | 26 | 26 |
| DSA 7 j. | 32 | 14 | 32 | 31 |
| R/R MPa | 1,8 | 1,3 | 1,65 | 1,6 |
| AR % | 258 | 478 | 275 | 300 |

Le tableau 4 montre que la composition a des propriétés inchangées après vieillissement accéléré seulement lorsque l'on a introduit de TOLONATE HDT.

Exemple 5

On reproduit le mode opératoire de l'exemple 4 en utilisant les différents ingrédients suivants:
100 parties d'huile alpha, oméga-dihydroxydiméthylpolysiloxane de viscosité 175 000 mPa.s à 25°C,
8 parties de silicate de méthyle,
0,5 partie de di n-hexylamine.
Après chauffage durant 45 minutes à 80°C on ajoute:
3 parties de gammamorpholinopropyltriméthoxysilane,
30 parties de plastifiant qui est une huile diméthylepolysiloxane bloquée à chaque extrémité de la chaîne par un radical triméthylsilyle de viscosité 50 mPa.s à 25°C,
9 parties de silice de combustion de surface spécifique BET 150 $m^2/g$,

35 parties de carbonate de calcium de diamètre particulaire moyen 5 micromètres,
0,1 partie de dilaurate de dibutylétain,
0 ou 1,5 partie de TOLONATE HDT.
On effectue les mêmes mesures qu'à l'exemple 4.
Les résultats sont rassemblés dans le tableau 5 ci-après, où apparaît l'effet stabilisant du TOLONATE HDT.

TABLEAU 5

| TOLONATE HDT | 0 | | 1,5 | |
|---|---|---|---|---|
| VIEILLISSEMENT | non | oui | non | oui |
| t/m | 40 | 45 | 30 | 30 |
| DSA 2 j. | 23 | 11 | 20 | 13 |
| DSA 7 j. | 24 | 15 | 24 | 23 |
| R/R MPa | 2,3 | 1,7 | 1,7 | 1,7 |
| AR % | 465 | 481 | 510 | 493 |

**Revendications**

1. Composition d'organopolysiloxane vulcanisable à température ambiante monocomposante stable au stockage en absence d'humidité et transformable en élastomère en présence d'humidité, caractérisée en ce qu'elle comporte:

(i) 100 parties d'au moins un polymère diorganopolysiloxane de formule:

$$R^2_{3-a}\,R^1_a\,Si(OSiR_2)_rOSiR^1_a\,R^2_{3-a} \qquad (2)$$

dans laquelle R identiques ou différents représentent des radicaux hydrocarbonés ayant de 1 à 10 atomes de carbone éventuellement substitués par des atomes d'halogène ou des groupes cyano, $R^1$ identiques ou différents représentant des radicaux hydrocarbonés en $C_1$—$C_{10}$, $R^2$ identiques ou différents représentent des radicaux alcoxy ou polyalcoxy de formules ZO ou ZOEO, dans lesquelles Z représente un radical alkyle en $C_1$—$C_4$, E un radical alkylène linéaire ou ramifié en $C_2$—$C_4$, a représente zéro ou 1 et le symbole r un

nombre ayant une valeur suffisante pour conférer au polymère de formule (2) une viscosité de 500 à 1 000 000 de mPa.s a 25°C.

(2i) 0 à 15 parties d'au moins un polyalcoxysilane de formule:

$$R^1_a\ Si\ R^2_{3-a} \quad (3)$$

dans laquelle $R^1$, $R^2$ et a ont la signification ci-dessus.

(3i) 0 à 250 parties de charges minérales.

(4i) 0,001 à 3 parties d'un catalyseur de condensation.

(5i) 0,001 à 15 parties d'au moins un composé aminé porteur d'au moins une fonction amine primaire ou secondaire choisis parmi les amines organiques ayant un pkb en milieux aqueux inférieure à 5 et les aminoorganosilanes et aminoorganopolysiloxanes portant par molécule à la fois:

au moins un groupe organique en $C_3$—$C_{15}$ lié par une liaison SiC à l'atome de silicium et porteur d'au moins une fonction amino,

et au moins un radical alcoxy en $C_1$—$C_5$ ou un radical alcoxyalkylèneoxy en $C_3$—$C_6$, ayant réagi avec une quantité stabilisatrice d'au moins un isocyanurate de formule:

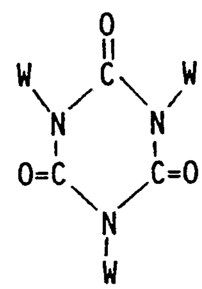

(1)

dans laquelle W est un radical $(CH_2)_{—a}$ N=C=O avec n est un nombre entier compris entre 1 et 12 inclus.

2. Composition selon la revendication 1, caractérisé en ce que dans la formule (1) n est compris entre 4 et 8 inclus.

3. Composition selon la revendication 2, caractérisé en ce que n = 6.

4. Composition selon l'une des revendications 1 à 3, caractérisée en ce qu'on utilise de 0,01 à 5 parties d'au moins un isocyanurate de formule (1).

5. Composition selon l'une quelconque des revendications précédentes, caractérisée en ce que (4i) est un composé de l'étain.

6. Composition selon l'une quelconque des revendications précédentes, caractérisée en ce qu'elle comporte en outre de 0,5 à 10 parties d'au moins un composé (6i) aminoorganosilane ou aminoorganopolysiloxane portant, par molécule, au moins un groupe organique en $C_3$—$C_{15}$ lié par une liaison SiC à l'atome de silicium et substitué par au moins un radical un radical amino à amine tertiare et/ou un radical guanidino et au moins un groupe alcoxy en $C_1$—$C_5$ ou un radical alcoxyalkylèneoxy en $C_3$—$C_6$.

7. Composition selon la revendication 6, caractérisée en ce que le composé (6i) répond à la formule:

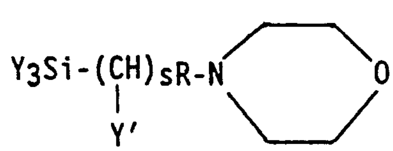

dans laquelle les radicaux Y, identiques ou différents sont choisis parmi un radical alkyle et alcoxy ayant inclusivement de 1 à 4 atomes de carbone au moins deux des radicaux Y étant des radicaux alcoxy, Y' identiques ou différents sont choisis parmi l'atome d'hydrogène et un radical alkyle ayant inclusivement de 1 à 3 atomes de carbone et s est un nombre entier comprise entre 3 et 10 inclusivement.

8. Composition selon l'une quelconque des revendications précédentes, caractérisée en ce que le catalyseur de condensation est un bis(β-dicétonate) de diorganoétain avec un dérivé organique de l'étain également de valence IV, mais exempt de fonction β-dicétonato, et possèdant au moins un atome d'étain, chaque atome d'étain portant deux radicaux organiques liés par une liaison Sn—C, les deux autres valences étant satisfaites au moyen de radicaux choisis parmi les radicaux organiques ou inorganiques liés par une liaison SnO, SnS, par des atomes d'halogènes, par des groupes hydroxy et par des atomes d'oxygène.

**Patentansprüche**

1. Bei Raumtemperatur vullkanisierbare Einkomponenten-Organopolysiloxan-Zusammensetzung, die bei Lagerung in Abwesenheit von Feuchtigkeit stabil ist und in Gegenwart von Feuchtigkeit in ein Elastomeres überführbar ist, dadurch gekennzeichnet, daß sie enthält

i) 100 Teile zumindest eines Diorganopolysiloxanpolymeren der Formel

$$R^2_{3-a}\ R^1_a\ Si(OSiR_2)_rOSiR^1_a\ R^2_{3-a} \qquad (2)$$

worin R, gleich oder voneinander verschieden, Kohlenwasserstoffreste mit 1 bis 10 Kohlenstoffatomen wiedergeben, die gegebenenfalls durch Halogenatome oder Cyanogruppen substituiert sind, $R^1$, gleich oder voneinander verschieden, $C_1$—$C_{10}$ Kohlenwasserstoffreste bedeuten, $R^2$, gleich oder voneinander verschieden, Alkoxy- oder Polyalkoxyreste der Formeln ZO oder ZOEO bedeuten, worin Z für einen $C_1$—$C_4$-Alkylrest steht, E einen linearen oder verzweigten $C_2$—$C_4$-Alkylenrest wiedergibt, a 0 oder 1 bedeutet und das Symbol R für eine Zahl mit einem ausreichend hohen Wert steht, um dem Polymeren der Formel (2) eine Viskosität von 500 bis 1 000 00 mPa.s bei 25°C zu verleihen;

2i) 0 bis 15 Teile zumindest eines Polyalkoxysilans der Formel

$$R^1_a\ Si\ R^2_{3-a} \qquad (3)$$

worin $R^1$, $R^2$ und a die vorstehende Bedeutung besitzen;

3i) 0 bis 250 Teile mineralische Füllstoffe;

4i) 0,001 bis 3 Teile eines Kondensationskatalysators;

5i) 0,001 bis 15 Teile zumindest einer Aminverbindung, die zumindest eine primäre oder sekundäre Aminfunktion trägt, ausgewählt unter den organischen Aminen mit einem pkb in wäßrigem Milieu unterhalb von 5 und den Amino-organosilanen und den Amino-organo-polysiloxanen, die je Molekül gleichzeitig enthalten:

zumindest eine organische $C_3$—$C_{15}$-Gruppe, die durch eine SiC-Bindung an das Siliciumatom gebunden ist und Träger zumindest einer Aminofunktion ist,

und zumindest einen $C_1$—$C_5$-Alkoxyrest oder einen $C_3$—$C_6$-Alkoxyalkylenoxyrest,

die mit einer stabilisierenden Menge zumindest eines Isocyanurats der Formel

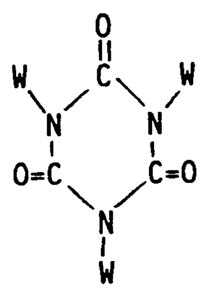

(1)

reagiert hat, worin W einen Rest $(CH_2)_n$— N=C=O wiedergibt, in dem n eine ganze Zahl zwischen 1 und 12 einschließlich bedeutet.

2. Zusammensetzung gemäß Anspruch 1, dadurch gekennzeichnet, daß in der Formel (1) n zwischen 4 und 8 einschließlich liegt.

3. Zusammensetzung gemäß Anspruch 2, dadurch gekennzeichnet, daß n = 6.

4. Zusammensetzung gemäß einem der Ansprüche 1 bis 3, dadurch gekennzeichnet, daß man 0,01 bis 5 Teile zumindest eines Isocyanurats der Formel (1) verwendet.

5. Zusammensetzung gemäß einem der vorhergehenden Ansprüche, dadurch gekennzeichnet, daß (4i) eine Zinnverbindung ist.

6. Zusammensetzung gemäß einem der vorhergehenden Ansprüche, dadurch gekennzeichnet, daß sie außerdem 0,5 bis 10 Teile zumindest einer Amino-organosilan- oder Amino-organopolysiloxanverbindung (6i) enthält, die je Molekül zumindest eine organische $C_3$—$C_{15}$-Gruppe aufweist, die durch eine SiC-Bindung an das Siliciumatom gebunden ist, und durch zumindest einen Aminorest mit tertiärem Amin und/oder einem Guanidinorest und zumindest eine $C_1$—$C_5$-Alkoxygruppe oder einen $C_3$—$C_6$-Alkoxyalkylenoxyrest substituiert ist.

7. Zusammensetzung gemäß Anspruch 6, dadurch gekennzeichnet, daß die Verbindung (6i) der Formel

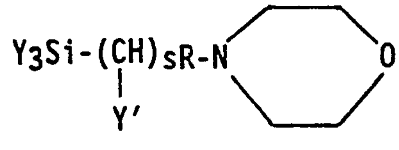

entspricht, worin die Reste Y, gleich oder voneinander verschieden, unter einem Alkyl- und Alkoxyrest mit einschließlich 1 bis 4 Kohlenstoffatomen ausgewählt sind, wobei zumindest zwei der Reste Y Alkoxyreste sind, Y', gleich oder voneinander verschieden, unter einem Wasserstoffatom und einem Alkylrest mit 1 bis 3 Kohlenstoffatomen einschließlich ausgewählt sind, und s für eine ganze Zahl zwischen 3 und 10 einschließlich steht.

8. Zusammensetzung gemäß einem der vorhergehenden Ansprüche, dadurch gekennzeichnet, daß der Kondensationskatalysator ein Diorganozinn-bis-β-diketonat zusammen mit einem organischen Derivat des Zinns ebenfalls der Wertigkeit IV, jedoch ohne β-Diketonatofunktion und mit zumindest einem Zinnatom ist, wobei jedes Zinnatom zwei über eine Sn-C-Bindung gebundene organische Reste enthält, wobei die beiden anderen Valenzen durch Reste abgesättigt sind, ausgewählt unter den organischen oder anorganischen Resten, die über eine SnO—, SnS-Bindung, über Halogenatome, über Hydroxygruppen und über Sauerstoffatome gebunden sind.

**Claims**

1. Organopolysiloxane composition capable of being vulcanized at room temperature, single-component, stable in storage in the absence of moisture and capable of being converted into an elastomer in the presence of moisture, characterized in that it comprises:

(i) 100 parts of at least one diorganopolysiloxane polymer of formula:

$$R^2_{3-a}\, R^1_a\, Si(OSiR_2)_r OSiR^1_a\, R^2_{3-a} \qquad (2)$$

in which R, which are identical or different, denote hydrocarbon radicals containing from 1 to 10 carbon atoms, optionally substituted by halogen atoms or cyano groups, $R^1$, which are identical or different, denoting $C_1$—$C_{10}$ hydrocarbon radicals, $R^2$, which are identical or different, denote alkoxy or polyalkoxy radicals of formulae ZO or ZOEO, in which Z denotes a $C_1$—$C_4$ alkyl radical, E a $C_2$—$C_4$ linear or branched alkylene radical, a denotes zero or 1 and the symbol r a number which has a sufficient value to give the polymer of formula (2) a viscosity of 500 to 1,000,000 mPa s at 25°C,

(ii) 0 to 15 parts of at least polyalkoxysilane of formula:

$$R^1_a\, Si\, R^2_{3-a} \qquad (3)$$

in which $R^1$, $R^2$ and a have the above meaning,

(iii) 0 to 250 parts of inorganic fillers,

(iv) 0.001 to 3 parts of a condensation catalyst,

(v) 0.001 to 15 parts of at least one amino compound bearing at least one primary or secondary amine functional group, chosen from organic amines which have a $pK_b$ lower than 5 in aqueous media and the aminoorganosilanes and aminoorganopolysiloxane bearing at the same time, per molecule:

at least one $C_3$—$C_{15}$ organic group bonded to the silicon atom by an SiC bond and bearing at least one amino functional group,

and at least one $C_2$—$C_5$ alkoxy radical or a $C_3$—$C_6$ alkoxyalkylenoxy radical,

having reacted with a stabilizing quantity of at least one isocyanurate of formula:

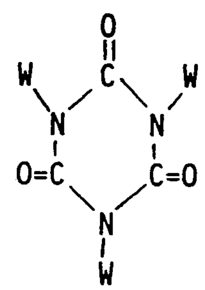

(1)

in which W is a $(CH_2)$—$_n N{=}C{=}O$ radical where n is an integer between 1 and 12 inclusive.

2. Composition according to Claim 1, characterized in that in formula (1) n is between 4 and 8 inclusive.

3. Composition according to Claim 2, characterized in that n = 6.

4. Composition according to one of Claims 1 to 3, characterized in that from 0.01 to 5 parts of at least one isocyanurate of formula (1) are employed.

5. Composition according to any one of the preceding claims, characterized in that (iv) is a tin compound.

6. Composition according to any one of the preceding claims, characterized in that it additionally comprises from 0.5 to 10 parts of at least one aminoorganosilane or aminoorganopolysiloxane compound (vi) bearing, per molecule, at least one $C_3$—$C_{15}$ organic group bonded to the silicon atom by an SiC bond

and substituted by at least one amino radical with a tertiary amine and/or a guanidino radical and at least one $C_1$—$C_5$ alkoxy group or a $C_3$—$C_6$ alkoxyalkylenoxy radical.

7. Composition according to Claim 6, characterized in that the compound (vi) corresponds to the formula:

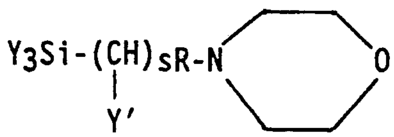

in which the radicals Y, which are identical or different, are chosen from an alkyl and alkoxy radical containing from 1 to 4 carbon atoms inclusively, at least two of the radicals Y being alkoxy radicals, Y', which are identical or different, are chosen from the hydrogen atom and an alkyl radical containing from 1 to 3 carbon atoms inclusively and s is an integer between 3 and 10 inclusively.

8. Composition according to any one of the preceding claims, characterized in that the condensation catalyst is a diorganotin bis(β-diketonate) with an organic derivative of tin, also of valency IV, but free from β-diketonato functional group and containing at least one tin atom, each tin atom bearing two organic radicals bonded by an Sn-C bond, the other two valencies being satisfied by means of radicals chosen from organic or inorganic radicals bonded by an SnO or SnS bond, by halogen atoms, by hydroxyl groups and by oxygen atoms.